# EUROPEAN PATENT APPLICATION

(11) **EP 4 542 532 A1**
(43) Date of publication of application: **23.04.2025**
(21) Application number: 23846786.4
(22) Date of filing: 05.06.2023
(51) Int. Cl.: G09G 3/00, G09G 5/377, G09G 5/10, G09G 5/02, G02B 27/01, G02B 27/00, G06F 3/01

(54) **WEARABLE ELECTRONIC DEVICE AND OPERATION METHOD THEREOF**

(30) Priority: 26.07.2022 KR 20220092746; 08.09.2022 KR 20220114327
(71) Applicant: Samsung Electronics Co., Ltd., Suwon-si, Gyeonggi-do 16677 (KR)
(72) Inventor: PARK, Kyongtae, Suwon-si, Gyeonggi-do 16677 (KR); KIM, Nari, Suwon-si, Gyeonggi-do 16677 (KR); YOO, Chanhyung, Suwon-si, Gyeonggi-do 16677 (KR); JUNG, Hoyoung, Suwon-si, Gyeonggi-do 16677 (KR)
(74) Representative: Gulde & Partner
(86) International application number: PCT/KR2023/007682
(87) International publication number: WO 2024/025126

(57) **Abstract**

Various embodiments of the present disclosure relate to a wearable electronic device and an operation method thereof. The wearable electronic device may include: at least one lens; a battery; a display; a waveguide for receiving an image from the display and outputting the received image through the at least one lens; an illuminance sensor for detecting external illuminance of the wearable electronic device; and a processor, wherein the processor: in response to a predetermined event, activates a visibility enhancement mode; in response to the activation of the visibility enhancement mode, detects ambient illuminance of the wearable electronic device by using the illuminance sensor; and on the basis of the detected illuminance, dynamically adjusts a displaying form of at least one object included in the image and the luminance of the image output through the display.

## Description

### [Technical Field]

Various embodiments of the present disclosure relate to a wearable electronic device and an operation method thereof.

### [Background Art]

Augmented reality (AR) is a field of virtual reality (VR) that refers to a computer graphics technique in which virtual objects or information are synthesized into an existing real environment to appear as if they are things of the original environment. Augmented reality is a display technology that overlays virtual objects onto the real world viewed by a user, and can be applied to products such as wearable electronic devices, providing diverse user experiences to the user. For example, a wearable electronic device that supports augmented reality may be a head-mounted display (HMD) device or AR glasses.

A wearable electronic device that supports augmented reality may include a display panel as a light source that outputs images, a projection lens that inputs the image output from the display panel to a light waveguide, and the light waveguide that propagates the input image to reach the user's eyes. A wearable electronic device that supports augmented reality may provide a see-through display, i.e., augmented reality functionality, as a light waveguide is disposed on at least a portion of at least one lens.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Solution]

When a wearable electronic device performs an augmented reality function, the visibility of an image displayed through at least one lens (e.g., see-through display) may be affected by external illuminance. When the external environment of the wearable electronic device is a bright outdoor condition, the visibility of an image may decrease. When the external illuminance is bright, the wearable electronic device may increase luminance of an image output from a light source unit to improve visibility. However, such operation of the wearable electronic device may increase power consumption and generate heat.

Various embodiments of the present disclosure may provide a wearable electronic device and an operation method thereof that is capable of reducing power consumption and heat generation in a high-illuminance ambient light environment and improve the visibility of an image by dynamically adjusting the luminance for each area displayed through a display panel, which is a light source unit, a form of the displayed image, and/or saturation of the displayed image, depending on the magnitude of illuminance of the ambient light.

Technical problems to be solved by the present disclosure are not limited to the above-mentioned technical problems, and other technical problems, which are not mentioned above, may be clearly understood from the following descriptions by those skilled in the art to which the present disclosure pertains.

A wearable electronic device, according to an embodiment, may include at least one lens, a battery, a display, a waveguide configured to receive an image from the display and output the received image through the at least one lens, an illuminance sensor configured to detect external illuminance of the wearable electronic device, and a processor, in which the processor may, in response to a predetermined event, activate a visibility enhancement mode; detects, in response to the activation of the visibility enhancement mode, ambient illuminance of the wearable electronic device using the illuminance sensor and dynamically adjust, on the basis of the detected illuminance, luminance of the image output through the display and a displaying form of at least one object included in the image.

In a method of a wearable electronic device, according to an embodiment, the wearable electronic device may include at least one lens, a battery, a display, a waveguide configured to receive an image from the display and output the received image through the at least one lens, an illuminance sensor configured to detect external illuminance of the wearable electronic device, and the method may include activating a visibility enhancement mode in response to a predetermined event, detecting ambient illuminance of the wearable electronic device using the illuminance sensor in response to the activation of the visibility enhancement mode, and adjusting dynamically luminance of an image output through the display and a displaying form of at least one object included in the image on the basis of the detected illuminance.

A wearable electronic device and an operation method thereof, according to various embodiments of the present disclosure, can reduce power consumption and heat generation in a high-illuminance ambient light environment and improve the visibility of an image by dynamically adjusting the luminance for each area displayed through a display panel, which is a light source unit, a form of the displayed image, and/or saturation of the displayed image, depending on the magnitude of illuminance of the ambient light.

In addition, various effects that can be directly or indirectly identified through the present disclosure may be provided.

The effects obtained by the present disclosure are not limited to the aforementioned effects, and other effects, which are not mentioned above, will be clearly understood by those skilled in the art from the following description.

### [Brief Description of Drawings]

Other aspects, features, and advantages according to specific embodiments of the present disclosure will become more apparent from the accompanying drawings and the corresponding description.
FIG. 1 is a block diagram of an electronic device in a network environment according to various embodiments.
FIG. 2 is a conceptual view illustrating a state in which a wearable electronic device according to an embodiment, worn by a user.
FIG. 3 is a block diagram illustrating the configuration of a wearable electronic device according to an embodiment.
FIG. 4 illustrates an optical path along which light travels in a wearable electronic device according to an embodiment.
FIG. 5 is a flowchart illustrating an operation of a wearable electronic device according to an embodiment.
FIG. 6A is an example illustrating a see-through screen viewed through a lens as well as an image output from a display of a wearable electronic device when external illuminance of the wearable electronic device according to an embodiment is within a first range.
FIG. 6B is an example illustrating a see-through screen viewed through a lens as well as an image output from a display of a wearable electronic device when external illuminance of the wearable electronic device according to an embodiment is within a second range.
FIG. 6C is an example illustrating a see-through screen viewed through a lens as well as an image output from a display of a wearable electronic device when external illuminance of the wearable electronic device according to an embodiment is within a third range.
FIG. 7A is an enlarged view of a portion of the see-through screen illustrated in FIG. 6A according to an embodiment.
FIG. 7B is an enlarged view of a portion of the see-through screen illustrated in FIG. 6B according to an embodiment.
FIG. 7C is an enlarged view of a portion of the see-through screen illustrated in FIG. 6C according to an embodiment.
FIG. 8 is an example illustrating a see-through screen according to an image output from a display of a wearable electronic device when the wearable electronic device is in an outdoor mixed illuminance environment according to an embodiment.
FIG. 9 is a schematic configuration view of a wearable electronic device according to an embodiment.
FIG. 10 is a block diagram illustrating constituent elements for generating an image in a wearable electronic device according to an embodiment.
FIG. 11 is a block diagram illustrating constituent elements for generating a brightness map in a wearable electronic device according to an embodiment.
FIG. 12 is a block diagram illustrating constituent elements for generating an image on the basis of external illuminance in a wearable electronic device according to an embodiment.
FIG. 13 is a block diagram illustrating constituent elements for adjusting resolution of an image to increase luminance of pixels in a wearable electronic device according to an embodiment.

Throughout the drawings, similar reference numerals are understood to refer to similar parts, constituent elements, and structures.

### [Mode for the Invention]

The following description with reference to the accompanying drawings is provided to give a comprehensive understanding of the various embodiments of the present disclosure, as defined by the claims and the equivalents thereof. Various specific details are included herewith for the purpose of the understanding, but should be considered as illustrative only. Therefore, those skilled in the art will recognize that various alterations and modifications may be made to the various embodiments disclosed in the present specification without departing from the scope and spirit of the present disclosure. In addition, for clarity and conciseness, descriptions of well-known features and constitutions may be omitted.

The terms and words used in the following descriptions and claims are not limited to their bibliographic meanings, but are used by the inventor only to enable a clear and consistent understanding of the present invention. Therefore, it should be obvious to those skilled in the art that the following descriptions of various embodiments of the present invention, as defined by the appended claims and the equivalents thereof, are not intended to limit the present invention, but are provided solely for the purpose of illustration.

The expressions in the singular form should be understood to include the plural referents unless the context clearly dictates otherwise. Therefore, for example, a reference to a "surface of a constituent element" may include a reference to one or more of those surfaces.

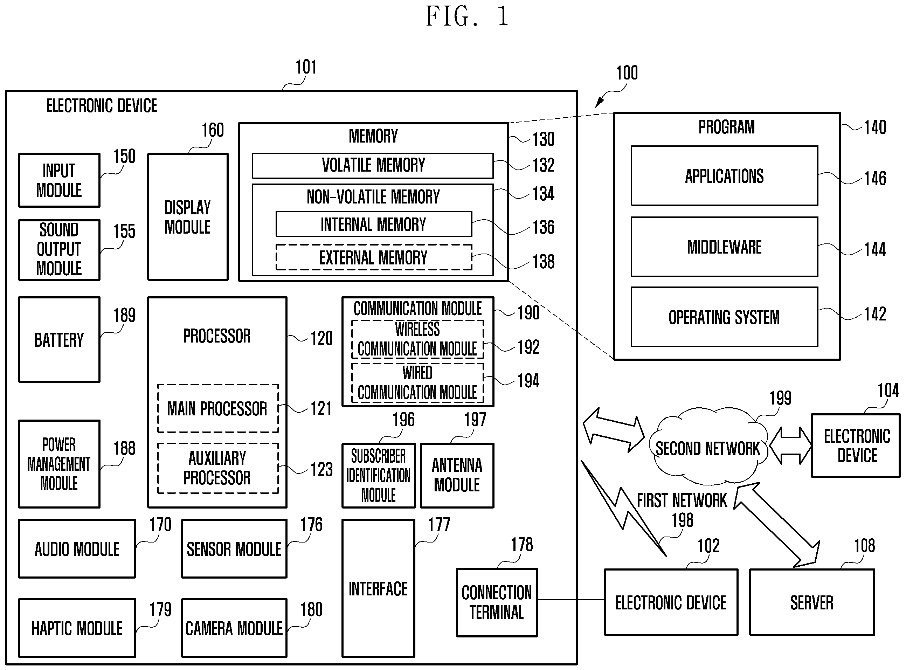

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

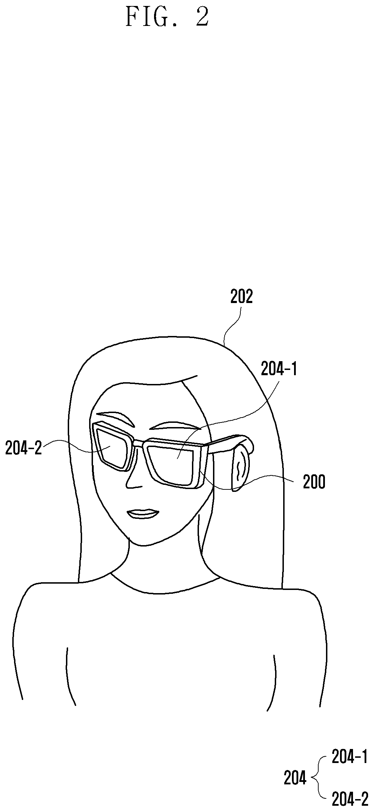

FIG. 2 is a conceptual view illustrating a state in which a wearable electronic device according to an embodiment, worn by a user.

The wearable electronic device illustrated in FIG. 2 may be at least partially similar to or substantially identical to the electronic device 101 illustrated in FIG. 1.

With reference to FIG. 2, a wearable electronic device 200 is a device that can be worn by a user 202 and may be, for example, one of the electronic devices including augmented reality (AR) glasses, a near-to-eye display (NED), or a head-mounted display (HMD). The near-to-eye display may be understood as a type of display in which a display panel is positioned very close to the user 202's eyes, allowing the user 202 to wear the near-to-eye display like glasses.

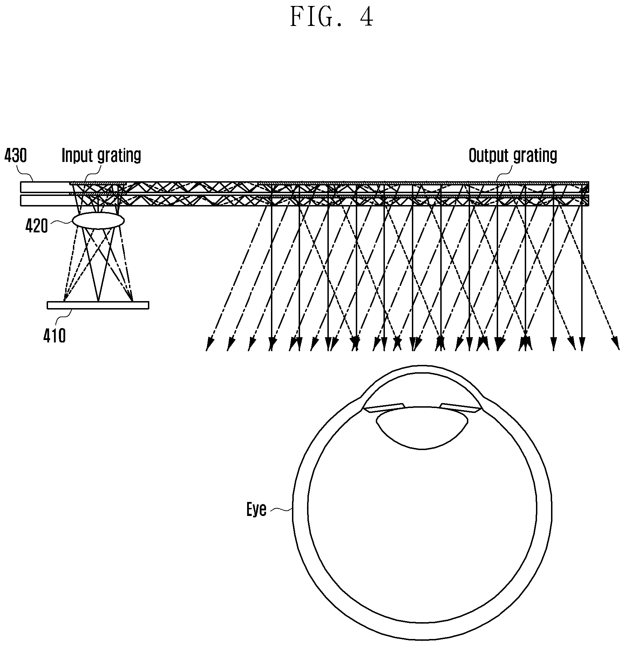

According to an embodiment, the wearable electronic device 200 may include a see-through display 204 corresponding to a near-to-eye display (e.g., first see-through display 204-1, second see-through display 204-2). At least a portion of the lens of the wearable electronic device 200 may include the see-through display 204. For example, the wearable electronic device 200 may include a left-eye lens or a right-eye lens, at least a portion of which may include a light waveguide (e.g., waveguide 430 in FIG. 4). At least a portion of the lens of the wearable electronic device, where the light waveguide 430 is disposed, may serve as the see-through display 204. For example, the left-eye lens of the wearable electronic device 200 corresponding to the user 202's left eye may include the first see-through display 204-1, and the right-eye lens of the wearable electronic device 200 corresponding to the user 202's right eye may include the second see-through display 204-2.

According to an embodiment, the see-through display 204 may be positioned close to the user 202 's eye, and the user 202 may wear the wearable electronic device 200, including the see-through display 204, like glasses.

According to an embodiment, the wearable electronic device 200 may display augmented reality images through the see-through display 204. The see-through display 204 may transmit light from the real environment (or real-world objects). The user 202 may perceive the light from the real environment transmitted through the see-through display 204 and thereby see the real environment. The see-through display 204 may refer to a transparent display that can transmit light from real-world objects while simultaneously displaying images of virtual objects. For example, the wearable electronic device 200 may display images of virtual objects through the see-through display 204. The user 202 may perceive real-world objects through the see-through display 204 of the wearable electronic device 200, and may perceive virtual objects overlaid thereon.

Various embodiments of the present disclosure describe a glasses-type wearable electronic device 200, but are not limited thereto. Various embodiments of the present disclosure may be applied to various electronic devices including a near-to-eye display. For example, various embodiments of the present disclosure may also be applied to a head-mounted display (HMD) device or a goggle-type wearable electronic device.

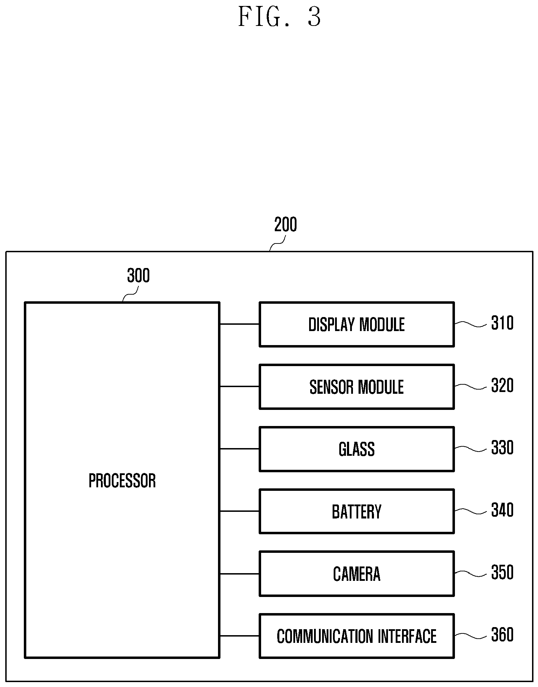

FIG. 3 is a block diagram illustrating the configuration of the wearable electronic device 200 according to an embodiment.

The wearable electronic device 200 illustrated in FIG. 3 (e.g., wearable electronic device 200 in FIG. 2) may be at least partially similar to or substantially identical to the electronic device 101 illustrated in FIG. 1.

With reference to FIG. 3, the wearable electronic device 200 according to an embodiment may include a processor 300 (e.g., processor 120 in FIG. 1), a display module 310 (e.g., display module 160 in FIG. 1), a sensor module 320 (e.g., sensor module 176 in FIG. 1), glasses (e.g., left-eye lens and/or right-eye lens) 330, a battery (or power supply device) 340 (e.g., battery 189 in FIG. 1), a camera 350 (e.g., camera module 180 in FIG. 1), and a communication interface 360 (e.g., communication module 190 in FIG. 1).

According to an embodiment, the module included in the wearable electronic device 200 may be understood as a hardware module (e.g., circuitry) included in the wearable electronic device 200. The constituent elements included in the wearable electronic device 200 may not be limited to the constituent elements illustrated in the block diagram of FIG. 3 (e.g., display module 310, sensor module 320, glasses 330, battery 340, camera 350, or communication interface 360).

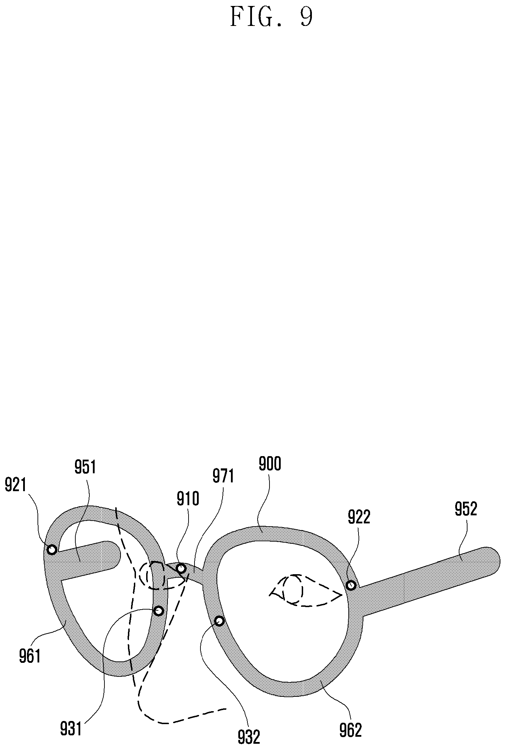

According to an embodiment, the constituent elements of the wearable electronic device 200 illustrated in FIG. 3 may be replaced with other constituent elements, or additional constituent elements described with reference to other drawings (e.g., FIGS. 9 to 13) may be added to the wearable electronic device 200.

According to an embodiment, the processor 300 may execute instructions stored in memory to control the operation of the constituent elements of the wearable electronic device 200 (e.g., display module 310, sensor module 320, battery 340, camera 350, and communication interface 360). The processor 300 may be electrically and/or operatively connected to the display module 310, sensor module 320, battery 340, camera 350, and communication interface 360. The processor 300 may execute software to control at least one of the other constituent elements connected to the processor 300 (e.g., display module 310, sensor module 320, battery 340, camera 350, and communication interface 360). The processor 300 may obtain commands from constituent elements included in the wearable electronic device 200, interpret the obtained commands, and process and/or calculate various data based on the interpreted commands.

According to an embodiment, the wearable electronic device 200 may receive data processed through the processor 120 embedded in an external device (e.g., electronic device 102 or 104 in FIG. 1, smartphone, or tablet PC) from the external device. For example, the wearable electronic device 200 may capture an object (e.g., real-world object or the user 202's eye) using the camera 350, transmit the captured image to an external device through the communication interface 360, and receive data based on the transmitted image from the external device. The external device may generate augmented reality-related image data based on information on the captured object (e.g., shape, color, or position) received from the wearable electronic device 200, and transmit the image data to the wearable electronic device 200. According to an embodiment, the wearable electronic device 200 may request additional information based on the captured image of an object (e.g., real-world object or the user 202's eye) through the camera 350 from an external device, and may receive additional information from the external device.

According to an embodiment, the display module 310 may include a display panel (e.g., display panel 410 in FIG. 4). In the present disclosure, "display" may refer to a "display panel" and may also refer to a light source unit that generates display light input to a waveguide.

According to an embodiment, the display panel 410 may emit display light for displaying augmented reality images on the basis of the control of the processor 300. The display panel 410 may be understood as a self-emissive display that emits light from the display itself or as a display that reflects and emits light emitted from a separate light source. For example, the wearable electronic device 200 (e.g., processor 300) may emit display light through the display panel 410 to display an augmented reality image in an display area of the see-through display 204. According to an embodiment, the wearable electronic device 200 (e.g., processor 300) may control the display panel 410 to display augmented reality images in the display area of the see-through display 204 in response to input from the user 202. According to an embodiment, the type of input from the user 202 may include button input, touch input, voice input, and/or gesture input, and is not limited thereto, and may include various input methods capable of controlling the operation of the display panel 410.

According to an embodiment, the wearable electronic device 200 may further include a light source unit (not illustrated) that emits additional light different from the display light emitted by the display panel 410 to enhance brightness around the user 202's eye. The light source unit may include a white LED or an infrared LED.

According to an embodiment, the glass 330 may include a waveguide (e.g., waveguide 430 in FIG. 4), and the waveguide 430 may include at least one of a display waveguide (not illustrated) or an eye-tracking waveguide (not illustrated).

According to an embodiment, the display waveguide may form a light path by guiding the display light emitted from the display panel 410 so that the display light is emitted into the display area of the see-through display 204. The see-through display 204 may correspond to at least one area of the display waveguide. For example, the area of the see-through display 204 may correspond to an area of the display waveguide where light propagating inside the display waveguide is emitted, while external light is transmitted simultaneously. For example, the see-through display 204 may be disposed at one end of the display waveguide included in the glass 330.

According to an embodiment, the display waveguide may include at least one of at least one diffraction element or a reflective element (e.g., a reflective mirror). The display waveguide may guide the display light emitted from the display panel 410 to the user 202's eye by using at least one diffraction element or reflective element included in the display waveguide. For example, the diffraction element may include an input/output (IN/OUT) grating, and the reflective element may include total internal reflection (TIR).

According to an embodiment, an optical material (e.g., glass) may be processed into a wafer form for use as a display waveguide, and the refractive index of the display waveguide may vary from approximately 1.5 to approximately 1.9.

According to an embodiment, the display waveguide may include a display area through which light traveling inside the waveguide 430 via total internal reflection is emitted to the outside. The display area may be disposed on a portion of the display waveguide. At least one area of the display waveguide may include a see-through display (e.g., see-through display 204 in FIG. 2).

According to an embodiment, the display waveguide may include a material (e.g., glass or plastic) capable of totally internally reflecting display light in order to guide the display light to the user 202's eye. The material is not limited to the aforementioned examples.

According to an embodiment, the display waveguide may disperse the display light emitted from the display panel 410 by wavelength (e.g., blue, green, or red), allowing each wavelength to travel along a separate path within the display waveguide.

According to an embodiment, the display waveguide may be disposed in the glass 330. For example, with respect to an imaginary axis that aligns a center point of the glass 330 with a center point of the user 202's eye, and an imaginary line perpendicular to the imaginary axis at the center point of the glass 330, an upper end and a lower end of the glass 330 may be distinguished, and the display waveguide may be disposed at the upper end of the glass 330. For another example, the display waveguide may be disposed across an area defined from the imaginary line to one-third point in the direction of the lower end between the upper end and lower end of the glass 330. The area in which the display waveguide is disposed is not limited to the aforementioned area of the glass 330, and the area in which the display waveguide is disposed may include any area of the glass 330 where the amount of light reflected to the user 202's eye is equal to or greater than a reference value.

According to an embodiment, the sensor module 320 may include at least one sensor (e.g., eye-tracking sensor and/or illuminance sensor). The at least one sensor is not limited to the aforementioned examples. For example, the at least one sensor may further include a proximity sensor or a contact sensor capable of detecting whether the user 202 is wearing the wearable electronic device 200. The wearable electronic device 200 may detect whether the user 202 is wearing the wearable electronic device 200 through the proximity sensor or contact sensor. When it is detected that the user 202 is wearing the wearable electronic device 200, the wearable electronic device 200 may pair passively and/or automatically with another electronic device (e.g., smartphone).

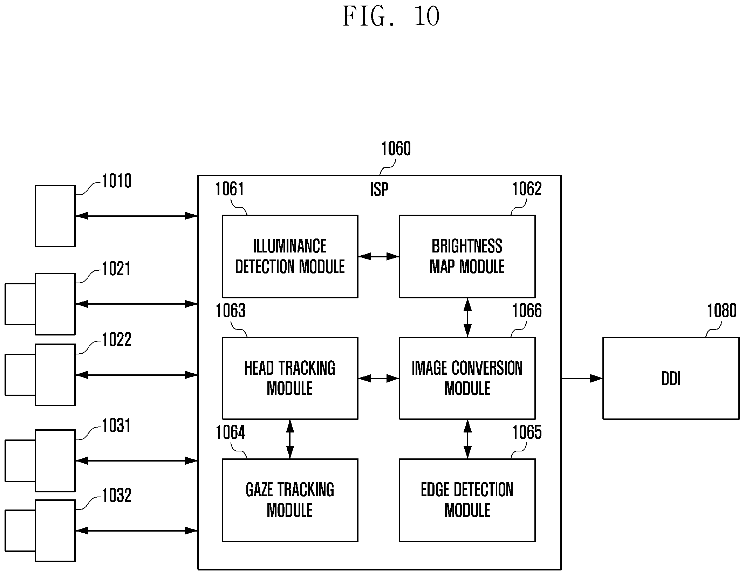

According to an embodiment, the eye-tracking sensor (e.g., gaze tracking module 1064 in FIG. 10) may detect the reflected light from the user 202's eye on the basis of the control of the processor 300. The wearable electronic device 200 may convert the reflected light detected by the eye-tracking sensor into an electrical signal. The wearable electronic device 200 may obtain an image of the user 202's eyeball through the converted electrical signal. The wearable electronic device 200 may track the user 202's gaze using the obtained image of the user 202's eyeball.

According to an embodiment, the illuminance sensor (e.g., illuminance sensor 1010 in FIG. 10) may detect ambient illuminance (or brightness) of the wearable electronic device 200, the amount of display light emitted from the display panel, brightness around the user 202's eye, or the amount of reflected light from the user 202's eye, on the basis of the control of the processor 300.

According to an embodiment, the wearable electronic device 200 may detect the ambient illuminance (or brightness) of the user 202 through the illuminance sensor 1010. The wearable electronic device 200 may adjust the amount of light (or brightness) of the display (e.g., display panel 410) on the basis of the detected illuminance (or brightness).

According to an embodiment, the glass 330 may include at least one of a display waveguide or an eye-tracking waveguide.

According to an embodiment, the eye-tracking waveguide may form a light path by guiding the reflected light from the user 202's eye so that the reflected light is emitted to the sensor module 320. The eye-tracking waveguide may be used to deliver the reflected light to the eye-tracking sensor.

According to an embodiment, the eye-tracking waveguide may be formed of the same elements as or different elements from the display waveguide.

According to an embodiment, the eye-tracking waveguide may be disposed in the glass 330. For example, with respect to an imaginary axis that aligns a center point of the glass 330 with a center point of the user 202's eye, and an imaginary line perpendicular to the imaginary axis at the center point of the glass 330, an upper end and a lower end of the glass 330 may be distinguished, and the eye-tracking waveguide may be disposed at the lower end of the glass 330. For another example, the eye-tracking waveguide may be disposed below the display waveguide. The eye-tracking waveguide and the display waveguide may be disposed in the glass 330 without overlapping each other. For another example, the eye-tracking waveguide may be disposed across an area excluding an area defined from the imaginary line to one-third point in the direction of the lower end of the lower end of the glass 330. The area in which the eye-tracking waveguide is disposed is not limited to the aforementioned area of the glass 330, and the area in which the eye-tracking waveguide is disposed may include any area of the glass 330 that allows an eye-tracking sensor to detect the amount of concentrated reflected light through the eye-tracking waveguide to be equal to or greater than a set value.

According to an embodiment, the display waveguide and the eye-tracking waveguide of the wearable electronic device 200 may be disposed in the glass 330. For example, the glass 330 (e.g., first see-through display 204-1 and/or second see-through display 204-2 in FIG. 2) may include the display waveguide and the eye-tracking waveguide. The material of the glass 330 may include glass or plastic. The material of the display waveguide and the eye-tracking waveguide may be the same as or different from the material of the glass 330.

According to an embodiment, the battery 340 may supply power to at least one constituent element of the wearable electronic device 200. The battery 340 may be charged by being connected to an external power source either wired or wirelessly.

According to an embodiment, the camera 350 may capture images of the surroundings of the wearable electronic device 200. For example, the camera 350 may capture an image of the user 202's eye or capture an image of a real-world object outside the wearable electronic device 200.

According to an embodiment, the communication interface 360 may include a wired interface or a wireless interface. The communication interface 360 may support the performance of direct communication (e.g., wired communication) or indirect communication (e.g., wireless communication) between the wearable electronic device 200 and an external device (e.g., smartphone or tablet PC).

FIG. 4 illustrates an optical path in which light travels within the wearable electronic device 200 according to an embodiment.

With reference to FIG. 4, the wearable electronic device 200 according to an embodiment may include a micro-LED display panel as the display panel 410. FIG. 4 illustrates that a portion of the light beam emitted from the display panel 410 is received through a projection lens 420. According to an embodiment, the projection lens 420 may serve to inputting the received light beam into the waveguide 430.

The waveguide 430 may be designed to form a grating with diffraction functionality, such as diffraction optical elements (DOE) or holographic optical elements (HOE), on some area of the plate, with variations in the period, depth, or refractive index of the grating. Accordingly, when the light signal input into the waveguide 430 propagates within the waveguide 430, part of the light signal may be delivered inside the waveguide 430, while another part of the light signal may be output to the outside of the waveguide 430, thereby distributing the light signal.

FIG. 4 exemplarily illustrates that two plates are combined to form the waveguide 430. According to an embodiment, depending on the selection of factors such as a size of an eye box of an output portion of the waveguide 430, the field of view of an output image, or the refractive index of the plate medium, the waveguide 430 may include one plate, two plates, or three separate plates suitable for each wavelength of red, green, and blue.

In FIG. 4, a diffraction optical element is used as an example of the waveguide 430, but may be replaced with a reflective optical element.

According to an embodiment, the display panel 410 may be configured to use individual LEDs as red pixels (not illustrated), green pixels (not illustrated), and blue pixels (not illustrated). The arrangement form of micro LEDs forming the red pixels, green pixels, and blue pixels may be variously modified and designed.

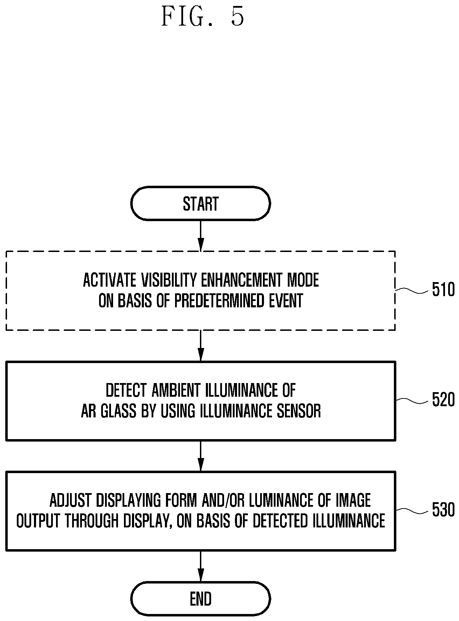

FIG. 5 is a flowchart illustrating an operation of the wearable electronic device 200 according to an embodiment.

At least some of the operations illustrated in FIG. 5 may be omitted. Before or after at least some of the operations illustrated in FIG. 5, at least some of the operations mentioned with reference to other drawings in the present disclosure may be additionally inserted.

The operations illustrated in FIG. 5 may be performed by the processor 120 (e.g., processor 120 in FIG. 1). For example, the memory (e.g., memory 130 in FIG. 1) of the electronic device may store instructions that, when executed, allow the processor 120 to perform at least some of the operations illustrated in FIG. 5.

At operation 510, the wearable electronic device 200 according to an embodiment may activate a visibility enhancement mode in response to a predetermined event. In the present disclosure, the term "visibility enhancement mode" is merely an example and may be variously modified. For example, the term "visibility enhancement mode" may be replaced with terms such as "power-saving mode."

According to an embodiment, the processor 120 may identify a battery level as the remaining charge of the battery. The processor 120 may activate the visibility enhancement mode in response to the battery level being below a designated threshold. In this case, the predetermined event may include a state in which the battery level is below the designated threshold.

According to an embodiment, the processor 120 may activate the visibility enhancement mode on the basis of input from the user 202 through an external device. For example, the user 202 may control the visibility enhancement mode of the wearable electronic device 200 using an external device (e.g., a smartphone) paired with the wearable electronic device 200 through short-range communication (e.g., Bluetooth). The external device may output a control signal to activate the visibility enhancement mode or a control signal to deactivate the visibility enhancement mode to the wearable electronic device 200 through short-range communication on the basis of the input from the user 202. The wearable electronic device 200 may receive a control signal corresponding to the user 202's input from an external device through short-range communication, and may activate or deactivate the visibility enhancement mode on the basis of the received control signal. In this case, the predetermined event may include input from the user 202 through an external device.

According to an embodiment, operation 510 may be bypassed. For example, the processor 120 may always perform the visibility enhancement mode without performing operation 510.

At operation 520, the wearable electronic device 200 according to an embodiment may detect the ambient illuminance of the wearable electronic device 200 using an illuminance sensor (e.g., illuminance sensor 1010 in FIG. 10).

According to an embodiment, the processor 120 may determine whether the detected illuminance is within a designated first range. The first range may be an illuminance range representing an outdoor environment on a clear day. For example, the wearable electronic device 200 may set the first range to be approximately 10,000 lux or more, but is not limited to this range.

According to an embodiment, the processor 120 may determine whether the detected illuminance is within a designated second range that is smaller than the first range. The second range may be an illuminance range representing an outdoor environment on a cloudy day or a shaded environment. For example, the wearable electronic device 200 may set the second range to be approximately 1,000 lux or more to less than approximately 10,000 lux, but is not limited to this range.

According to an embodiment, the processor 120 may determine whether the detected illuminance is within a designated third range that is smaller than the second range. The third range may be an illuminance range representing an indoor environment. For example, the wearable electronic device 200 may set the third range to be less than approximately 1,000 lux, but is not limited to this range.

In the example, the processor 120 divides the illuminance corresponding to the external environment into three different ranges. However, this is merely an example and is not limited thereto. For example, the processor 120 may be configured to divide the illuminance corresponding to the external environment into two different ranges or more than two ranges.

At operation 530, the wearable electronic device 200 according to an embodiment may dynamically adjust the luminance of the image output through the display and/or the displaying form of at least one object included in the image on the basis of the detected illuminance.

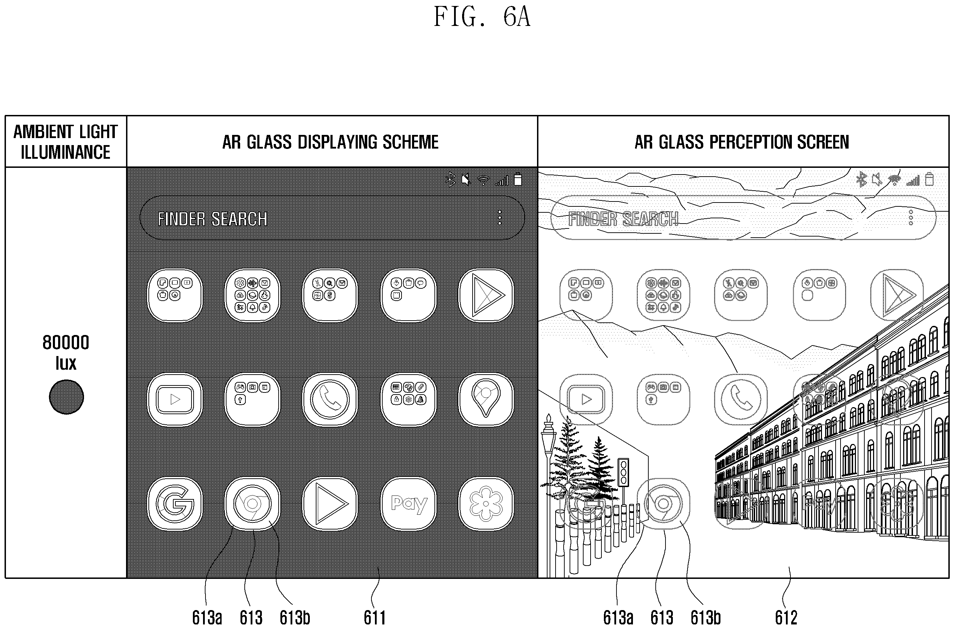

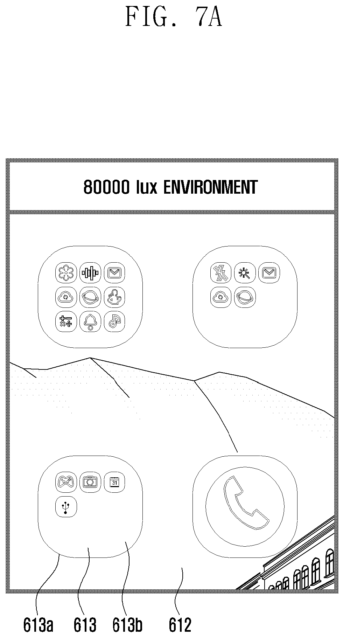

According to an embodiment, the processor 120 may set the overall luminance of the image to a first luminance level when the detected illuminance is within the designated first range. The processor 120 may identify the outline of at least one object included in the image. The processor 120 may generate a first converted image including only the identified outline and control the display to display the first converted image on the basis of the first luminance level. The operation of such a wearable electronic device 200 will be specifically described later in connection with FIG. 6A and FIG. 7A.

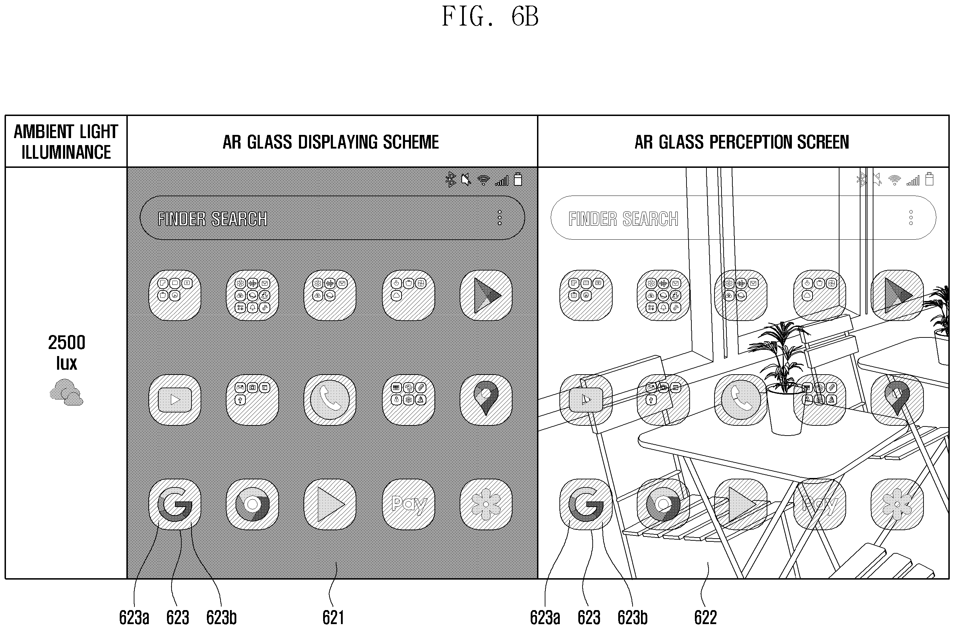

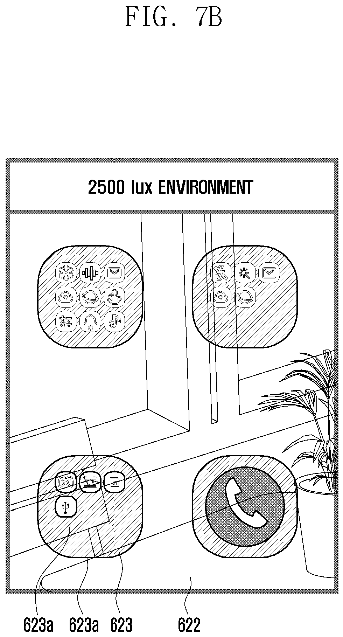

According to an embodiment, the processor 120 may set the overall luminance of the image to a second luminance level that is lower than the first luminance level when the detected illuminance is within the designated second range that is smaller than the first range. The processor 120 may identify the outline of at least one object included in the image. The processor 120 may divide the image into an outline area corresponding to the outline and a non-outline area excluding the outline area, on the basis of the identified outline. The processor 120 may generate a second converted image by setting the luminance of the outline area higher than the luminance of the non-outline area, and control the display to display the second converted image on the basis of the second luminance level. The processor 120 may set the color of the outline included in the first converted image to white or green. The operation of such a wearable electronic device 200 will be specifically described later in connection with FIG. 6B and FIG. 7B.

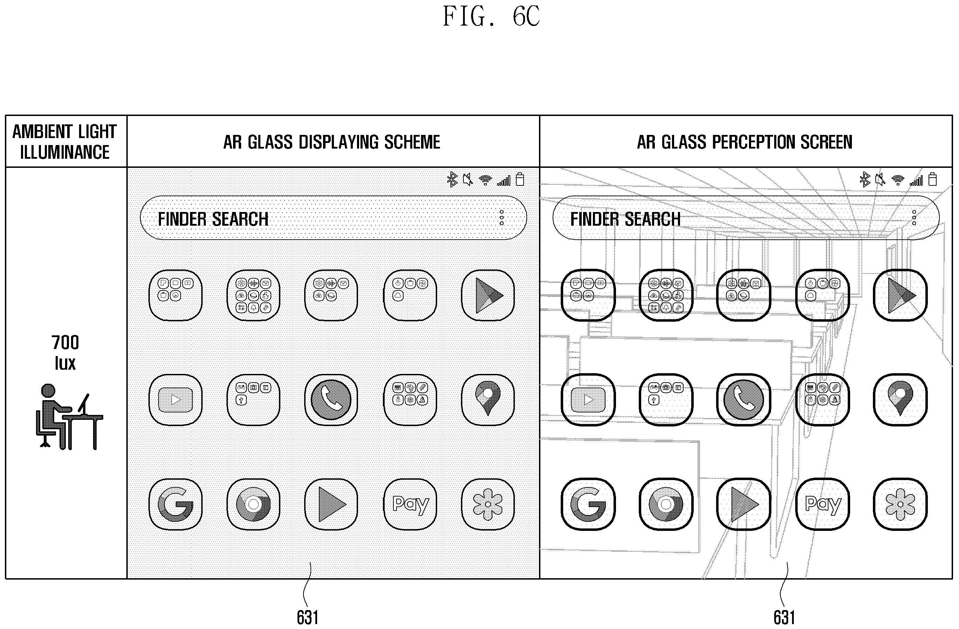

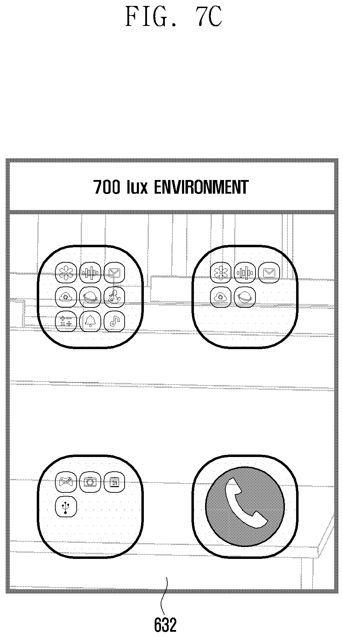

According to an embodiment, the processor 120 may set the overall luminance of the image to a third luminance level that is lower than the second luminance level when the detected illuminance is within a designated third range that is smaller than the second range. The processor 120 may control the display to display the image on the basis of the third luminance level. The operation of such a wearable electronic device 200 will be specifically described later in connection with FIG. 6C and FIG. 7C.

FIG. 6A is an example illustrating an image output from the display of the wearable electronic device 200 and a see-through screen viewed through at least a portion of the glass (e.g., see-through display 204 in FIG. 2) when the external illuminance of the wearable electronic device 200 is within the first range, according to an embodiment. FIG. 7A is an enlarged view of a portion of the see-through screen illustrated in FIG. 6A according to an embodiment.

In FIG. 6A, an image 611 may represent an image output from the display of the wearable electronic device 200 when the external illuminance of the wearable electronic device 200 is within the first range.

In FIG. 6A and FIG. 7A, an image 612 is an example illustrating a see-through screen as viewed by the user 202 through the lens as the display outputs the image 611.

According to an embodiment, the wearable electronic device 200 may control the display to display only the outline image when the external illuminance is within the designated first range. In FIG. 6A and FIG. 7A, it is exemplarily illustrated that the wearable electronic device 200 controls the display to display only the outline image in an environment where the external illuminance is approximately 80,000 lux.

In an outdoor environment on a clear day, where the external illuminance is in the first range, such as approximately 80,000 lux, the visibility of the image viewed by the user 202 through the see-through display 204 of the wearable electronic device 200 may be low. For driving the wearable electronic device 200 with high visibility in an outdoor illuminance environment on a bright day, exemplified as approximately 80,000 lux, a very high display driving power may be required. According to an embodiment, the wearable electronic device 200 may set the maximum power consumption available for the display to be used for displaying an outline portion 613a of the display screen to enhance visibility in an outdoor environment on a clear day, where the external illuminance is in the first range, such as approximately 80,000 lux.

According to the example of FIG. 6A and FIG. 7A, the proportion of pixels corresponding to the outline portion 613a may correspond to approximately 7 % of the entire screen. The wearable electronic device 200 may drive pixels corresponding to the pixel area other than the outline portion 613a (e.g., non-outline portion 613b) to be turned off, and may use the maximum power consumption available to the display for turning on the pixels corresponding to the outline portion 613a. In this case, the pixels corresponding to the outline portion 613a may be expected to have an approximately 14-fold increase in luminance, which is arithmetically 100/7, without increasing the overall driving power of the display.

According to an embodiment, the wearable electronic device 200 may set the color of the outline portion 613a to white or to green, which has a high response in terms of visual sensitivity characteristics.

According to an embodiment, the processor 120 may set the overall luminance of the image to a first luminance level when the detected illuminance is within the designated first range. The processor 120 may identify the outline of at least one object 613 included in the image. The processor 120 may generate a first converted image including only the identified outline and control the display (e.g., display panel 410 in FIG. 4) to display the first converted image on the basis of the first luminance level. Here, the first converted image may refer to an image including only the outline portion 613a. The processor 120 may display the color of the outline included in the first converted image in white, but is not limited thereto and may set the color to green, which has a high response in terms of visual sensitivity characteristics.

According to an embodiment, the processor 120 may change the color of the outline included in the first converted image not only to white or green but also change the color of the outline on the basis of the color of the image displayed around the outline. For example, the processor 120 may determine the complementary color of the color of the image displayed around the outline and set the color of the outline to the determined complementary color. The electronic device 101 may enhance the visibility of the outline by setting the color of the outline to the complementary color of the color of the image displayed around the outline.

According to an embodiment, the processor 120 may increase the width (e.g., length, thickness, or breadth) of the outline included in the first converted image in proportion to magnitude of the detected illuminance. For example, the processor 120 may adjust the width of the outline on the basis of the magnitude of external illuminance even when the external illuminance is within the first range.

According to an embodiment, the processor 120 may divide a plurality of pixels of the display 410 into an on-pixel group corresponding to the outline portion 613a and an off-pixel group corresponding to the non-outline portion 613b when the visibility enhancement mode is activated. The processor 120 may apply designated power and offset power to the on-pixel group to enhance the luminance of the on-pixel group while displaying the first converted image through the display 410. Here, the offset power may be the power used to turn on the off-pixel group.

In the present disclosure, the first converted image may refer to an image displaying only the outline portion 613a of at least one object 613 included in the image, as described above.

In the present disclosure, the outline portion 613a may refer to an outline area including only the outline of at least one object 613 included in the image.

In the present disclosure, the non-outline portion 613b may refer to a non-outline area positioned inside the outline of at least one object 613 included in the image.

FIG. 6B is an example illustrating the see-through screen viewed through the lens as well as an image output from a display (e.g., display panel 410 in FIG. 4) of the wearable electronic device 200 when the external illuminance of the wearable electronic device 200 according to an embodiment is within the second range. FIG. 7B is an enlarged view of a portion of the see-through screen illustrated in FIG. 6B according to an embodiment.

In FIG. 6B, an image 621 may represent an image output from the display 410 of the wearable electronic device 200 when the external illuminance of the wearable electronic device 200 is within the second range.

In FIGS. 6B and 7B, an image 622 is an example illustrating the see-through screen viewed by the user 202 through the lens as the display 410 outputs the image 621.

According to an embodiment, the wearable electronic device 200 may control the display (e.g., display panel 410 in FIG. 4) to display an image in which the luminance of the outline portion 623a is set differently from the luminance of the non-outline portion 623b when the external illuminance is within the designated second range. In FIGS. 6B and 7B, it is exemplarily illustrated that the wearable electronic device 200 displays an image in which the luminance of the outline portion 623a is set differently from the luminance of the non-outline portion 623b in an outdoor environment with cloudy weather or in a shaded environment, where the external illuminance is approximately 2500 lux.

In an outdoor environment with cloudy weather or in a shaded environment where the external illuminance is within the second range, such as approximately 2500 lux, the visibility of the image viewed by the user 202 through the see-through display (e.g., see-through display 204 in FIG. 2) of the wearable electronic device 200 may be improved compared to the environment exemplified in FIGS. 6A and 7A. However, since an outdoor environment with cloudy weather or a shaded environment is still brighter than an indoor environment, a reduction in visibility may occur, and very high display 410 driving power may be required for driving the wearable electronic device 200 with high visibility. According to an embodiment, the wearable electronic device 200 may set the luminance of the outline portion 623a to be greater than the luminance of the non-outline portion 623b to improve visibility in an outdoor environment with cloudy weather or in a shaded environment where the external illuminance is within the second range, such as approximately 2500 lux. Accordingly, the wearable electronic device 200 may reduce power consumption while improving visibility.

According to an embodiment, the processor 120 may set the overall luminance of the image to a second luminance level that is lower than the first luminance level when the detected illuminance is within the designated second range that is smaller than the first range. The processor 120 may identify the outline of at least one object 623 included in the image and, on the basis of the identified outline, divide the image into an outline area corresponding to the outline and a non-outline area excluding the outline area. The processor 120 may generate a second converted image by setting the luminance of the outline area higher than the luminance of the non-outline area, and control the display 410 to display the second converted image on the basis of the second luminance level.

According to an embodiment, the saturation of the second converted image may be set lower than the saturation of the pre-converted image. For example, the wearable electronic device 200 may be set to display the non-outline portion 623b of the object 623 included in the image in an outdoor environment with cloudy weather or in a shaded environment where the external illuminance is within the second range, such as approximately 2500 lux, and may reduce power consumption by lowering the saturation of the non-outline portion 623b.

In the present disclosure, the second converted image may refer to an image in which the luminance of the outline portion 623a of at least one object 623 included in the image is set higher than the luminance of the non-outline portion 623b, as described above.

FIG. 6C is an example illustrating the see-through screen viewed through the lends as well as an image output from the display (e.g., display panel 410 in FIG. 4) the wearable electronic device 200 when the external illuminance of the wearable electronic device 200 according to an embodiment is within the third range. FIG. 7C is an enlarged view of a portion of the see-through screen illustrated in FIG. 6C according to an embodiment.

In FIG. 6C, an image 631 may represent an image output from the display (e.g., display panel 410 in FIG. 4) of the wearable electronic device 200 when the external illuminance of the wearable electronic device 200 is within the third range.

In FIGS. 6C and 7C, an image 632 is an example illustrating the see-through screen viewed by the user 202 through the lens as the display 410 outputs the image 631.

According to an embodiment, the wearable electronic device 200 may control the display 410 to display the image without separate luminance control when the external illuminance is within the designated third range. In FIGS. 6C and 7C, it is exemplarily illustrated that the display 410 of the wearable electronic device 200 displays the image without separate luminance control for an object 633 in an indoor environment where the external illuminance is approximately 700 lux.

In a dark indoor environment with external illuminance of approximately 700 lux, the visibility of the image viewed by the user 202 through the see-through display (e.g., see-through display 204 in FIG. 2) of the wearable electronic device 200 may be excellent. Accordingly, the wearable electronic device 200 may display the image without separate luminance control for the object 633 in a dark indoor environment where the external illuminance is approximately 700 lux.

According to an embodiment, the processor 120 may set the overall luminance of the image to a third luminance level that is lower than the second luminance level when the detected illuminance is within a designated third range that is smaller than the second range. The processor 120 may control the display 410 to display the image on the basis of a third luminance level without separate luminance control.

In FIGS. 6A to 7C, the wearable electronic device 200 exemplarily divides the illuminance environment into three illuminance levels; however, it is possible to variably adjust the luminance settings according to the illuminance levels within the power consumption limits of the display 410, and to variably adjust the luminance ratio between the outline portion and the non-outline portion according to the illuminance level. For example, the wearable electronic device 200 may be set such that a difference in luminance ratio between the outline portion and the non-outline portion increases as the illuminance environment becomes brighter, and the luminance of the non-outline portion decreases in proportion to the external illuminance, eventually resulting in a state where only the outline portion is driven. Similarly, the wearable electronic device 200 may be set such that the difference in luminance ratio between the outline portion and the non-outline portion decreases as the illuminance environment becomes darker, eventually resulting in a state where the luminance ratio of the outline portion and the non-outline portion is the same, making the outline portion and the non-outline portion be in an indistinguishable state.

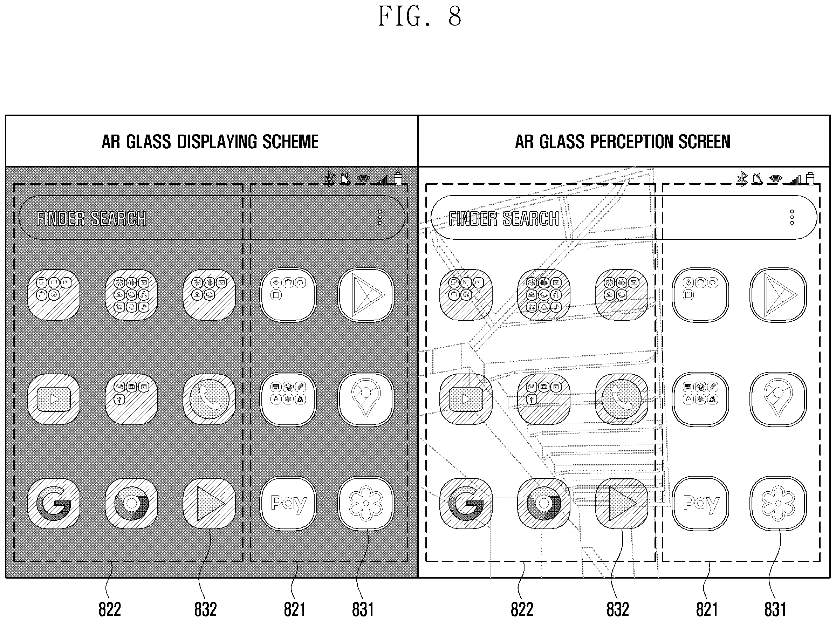

FIG. 8 is an example illustrating the see-through screen according to the image output from the display 410 of the wearable electronic device 200 when the wearable electronic device 200 is in an outdoor mixed illuminance environment, according to an embodiment.

In FIG. 8, an image 811 may represent an image output from the display 410 of the wearable electronic device 200 when the wearable electronic device 200 is in an outdoor mixed illuminance environment.

In FIG. 8, an image 812 is an example illustrating the see-through screen viewed by the user 202 through the lens as the display 410 outputs the image 811.

With reference to FIG. 8, the wearable electronic device 200 according to an embodiment may set the luminance ratio of the outline portion (e.g., outline portion 623a in FIG. 6B) and the non-outline portion (e.g., non-outline portion 623b in FIG. 6B) differently for each area, in conjunction with the illuminance differences by position of the external environment. For example, in an outdoor environment, the external environment viewed by the user 202 may have both sunny and shaded spots, where the illuminance of the sunny spot is bright and the illuminance of the shaded spot is relatively lower. The wearable electronic device 200 may determine a sunny area 821 corresponding to the sunny spot in the user's 202 gaze and a shaded area 822 corresponding to the shaded spot in the user's 202 gaze, in order to improve the visibility of the display screen and reduce power consumption. The wearable electronic device 200 may be set such that a portion of the image corresponding to the sunny area 821 displays only the outline portion (e.g., outline portion 613a in FIG. 6A), and may control the display 410 to display an image in which the luminance ratio between the outline portion 623a and the non-outline portion 623b is adjusted for another portion corresponding to the shaded area 822.

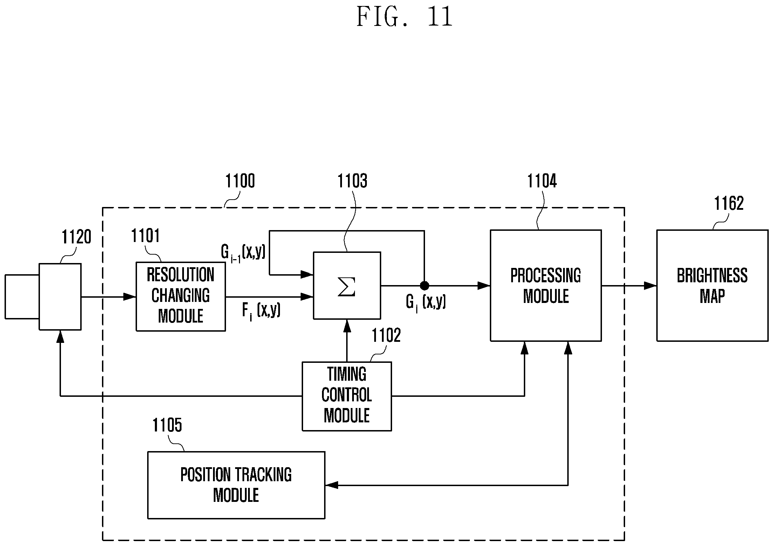

According to an embodiment, the processor 120 may generate a brightness map (e.g., brightness map 1162 in FIG. 11) corresponding to the front environment of the wearable electronic device 200 using the illuminance sensor 1010. The brightness map 1162 may include brightness information mapped for each area of the front environment of the wearable electronic device 200. The processor 120 may track the user 202's eyeball using an eyeball-tracking camera and determine the user 202's gaze direction within the front environment of the wearable electronic device 200 by tracking the user 202's eyeball. The processor 120 may determine the brightness of each area in the field of view corresponding to the user 202's gaze direction on the basis of the brightness map 1162. The processor 120 may divide the field of view into the sunny area 821 and the shaded area 822 on the basis of the brightness for each area in the field of view. For example, in each of the images 811 and 812 illustrated in FIG. 8, the area 821 may be an area set as the sunny area 821 by the processor 120 of the wearable electronic device 200. In each of the images 811 and 812 illustrated in FIG. 8, the area 822 may be an area set as the shaded area 822 by the processor 120 of the wearable electronic device 200.

According to an embodiment, the processor 120 may control the display 410 to display the first converted image through the sunny area 821 and the second converted image through the shaded area 822. For example, the processor 120, in the wearable electronic device 200, may display a portion of the image corresponding to the sunny area 821 in the form of the first converted image, which displays only the outline portion (e.g., outline portion 613a in FIG. 6A), and may display another portion of the image corresponding to the shaded area 822 in the form of the second converted image, in which the luminance ratio between the outline portion 623a and the non-outline portion 623b is adjusted. For example, the wearable electronic device 200 may display at least one first object 831 in the sunny area 821, but display only the outline of the first object 831, similar or identical to the example in FIG. 6A. The wearable electronic device 200 may display at least one second object 832 in the shaded area 822, but display the second object 832 in a form where the luminance ratio between the outline portion 623a and the non-outline portion 623b is adjusted, similar or identical to the example in FIG. 6B.

FIG. 9 is a schematic configuration view of a wearable electronic device 900 according to an embodiment.

With reference to FIG. 9, the wearable electronic device 900 (e.g., wearable electronic device 200 in FIG. 2) according to an embodiment may include an illuminance sensor 910 (e.g., sensor module 320 in FIG. 3), a first camera 921 (e.g., camera 350 in FIG. 3), a second camera 922 (e.g., camera 350 in FIG. 3), a third camera 931 (e.g., camera 350 in FIG. 3), and/or a fourth camera 932 (e.g., camera 350 in FIG. 3).

According to an embodiment, the wearable electronic device 200 may have a glasses form including frame members 961 and 962 and temple members 951 and 952. The frame members 961 and 962 may include a first frame member 961 corresponding to the user 202's right eye and surrounding the first see-through display 204, a second frame member 962 corresponding to the user 202's left eye and surrounding the second see-through display 204, and a bridge member 971 positioned between the first frame member 961 and the second frame member 962. The temple members 951 and 952 may include a first temple member 951 connected to one end of the first frame member 961, and a second temple member 952 connected to one end of the second frame member 962.

According to an embodiment, the illuminance sensor 910 of the wearable electronic device 200 may be disposed on at least a portion of the bridge member 971, but is not limited thereto. According to an embodiment, the wearable electronic device 200 may detect the ambient illuminance of the wearable electronic device 200 using the illuminance sensor 910.

According to an embodiment, the wearable electronic device 200 may include a first camera 921 and a second camera 922, as at least one front camera configured to capture the front of the wearable electronic device 200. The first camera 921 may be disposed on at least a portion of the first frame member 961. The second camera 922 may be disposed on at least a portion of the second frame member 962. The first camera 921 and the second camera 922 may be positioned symmetrically with respect to the bridge member 971. The first camera 921 and the second camera 922 may be a pair of cameras that monitor the front situation of the wearable electronic device 200, and may be configured to detect the movement of the wearable electronic device 200, the rotation of the user 202's head, and the like. The wearable electronic device 200 may generate an environmental map of the surroundings of the wearable electronic device 200 using the data or signals detected by the first camera 921 and the second camera 922, and may perform a mixing of the surrounding environment with the image generated by the wearable electronic device 200.

According to an embodiment, the wearable electronic device 200 may include a third camera 931 and a fourth camera 932, as at least one eyeball-tracking camera configured to track the user 202's eyeball. The third camera 931 may be disposed on at least a portion of the first frame member 961. The fourth camera 932 may be disposed on at least a portion of the second frame member 962. The third camera 931 and the fourth camera 932 may be positioned symmetrically with reference to the bridge member 971. The wearable electronic device 200 may determine the user 202's gaze direction by tracking the user 202's eyeball using the third camera 931 and the fourth camera 932, and may perform functions related to user 202 interaction on the basis of the determined gaze direction. The functions related to user 202 interaction may include a function of displaying information corresponding to the user 202's gaze direction through the see-through display 204, and a function of dynamically varying the form in which an object is displayed depending on the brightness for each area in the field of view corresponding to the user 202's gaze direction, and the like.

FIG. 10 is a block diagram illustrating constituent elements for generating an image in the wearable electronic device 200 according to an embodiment.

With reference to FIG. 10, the wearable electronic device 200 according to an embodiment may include an illuminance sensor 1010 (e.g., illuminance sensor 910 in FIG. 9), a first camera 1021 (e.g., first camera 921 in FIG. 9), a second camera 1022 (e.g., second camera 922 in FIG. 9), a third camera 1031 (e.g., third camera 931 in FIG. 9), and/or a fourth camera 1032 (e.g., fourth camera 932 in FIG. 9), and the data or signals obtained from each of these may be input to an image processing processor 1060 of the wearable electronic device 200. The image processing processor 1060 illustrated in FIG. 10 may be substantially the same as the processor 120 illustrated in FIG. 1 or the processor 300 illustrated in FIG. 3, or may be a constituent element included therein. According to an embodiment, the image processing processor 1060 may include an illuminance detection module 1061, a head tracking module 1063, a gaze tracking module 1064, a brightness map module 1062, an edge detection module 1065, or an image conversion module 1066.

According to an embodiment, the illuminance detection module 1061 may determine the overall illuminance level of the surrounding environment of the wearable electronic device 200 on the basis of the signal obtained through the illuminance sensor 1010.

According to an embodiment, the brightness map module 1062 may generate a brightness map (e.g., brightness map 1162 in FIG. 11) by combining ambient illuminance information on the wearable electronic device 200 obtained through the illuminance sensor 1010 and image information obtained through the first camera 1021 and the second camera 1022.

According to an embodiment, the head tracking module 1063 may determine the movement of the wearable electronic device 200 and the direction of the user 202's head by using the image information obtained through the first camera 1021 and the second camera 1022.

According to an embodiment, the gaze tracking module 1064 may track the user 202's gaze through the third camera 1031 and the fourth camera 1032, and the data related to the user 202's gaze may be combined with the data on the movement of the wearable electronic device 200 and the direction of the user 202's head, as determined by the head tracking module 1063, to generate multidimensional composite information on which direction the user 202 is looking at within the surrounding environment of the wearable electronic device 200.

According to an embodiment, the edge detection module 1065 may perform an operation of detecting an edge area (e.g., outline area) of at least one object from the image to be displayed by the display panel 410.

According to an embodiment, the image conversion module 1066 may generate a first converted image including only the outline portion based on the detected edge area, or generate a second converted image in which the luminance of the outline portion differs from that of the non-outline portion. According to an embodiment, the image conversion module 1066 may generate the first converted image or the second converted image by matching and combining the brightness map 1162 with the user 202's gaze direction. The first converted image or the second converted image generated by the image conversion module 1066 may be delivered from the image processing processor 1060 to a display driving IC (DDI) 1080 that drives the display panel 410, so as to be output through the display panel 410.

FIG. 11 is a block diagram illustrating constituent elements for generating the brightness map 1162 in the wearable electronic device 200 according to an embodiment.

With reference to FIG. 11, the image processing processor 1100 according to an embodiment (e.g., image processing processor 1060 in FIG. 10) may include a resolution changing module 1101, a timing control module 1102, an accumulation module 1103, and/or a processing module 1104. According to an embodiment, the image processing processor 1100 may further include a position tracking module 1105 for tracking the position of the wearable electronic device 200. The image processing processor 1100 disclosed in FIG. 11 may be substantially the same as the image processing processor 1060 described with reference to FIG. 10, or may a processing module corresponding to at least a part of the image processing processor 1060 described with reference to FIG. 10.

According to an embodiment, the wearable electronic device 200 may include a depth camera 1120 configured to extract depth information. The depth camera 1120 may be a camera that combines the first camera 1021 and the second camera 1022 illustrated in FIG. 10. The depth camera 1120 may generate depth information using the characteristic of difference in parallax between the image obtained through the first camera 1021 and the image obtained through the second camera 1022. The depth information generated by the depth camera 1120 may be input to the image signal processor 1100. According to an embodiment, the wearable electronic device 200 may obtain depth information and an image corresponding to the surrounding environment (e.g., ambient environment information) using the depth camera 1120.

According to an embodiment, the resolution changing module 1101 of the image signal processor 1100 may adjust a size of the image obtained using the depth camera 1120. The resolution changing module 1101 may perform operations such as binning a portion of the input image, thereby generating an image with a lower resolution compared to the original image. Such an image signal processor 1100 may increase the speed of extracting the brightness map 1162 by lowering the resolution of the input image. According to an embodiment, the image input by the depth camera 1120 may be input directly to the accumulation module 1103 without passing through the resolution changing module 1101.

In FIG. 11, the output of the resolution changing module 1101 is represented as Fi(x, y). In FIG. 11, Fi(x, y) and Gi(x, y) represent image information, where i is an integer value indicating the number of acquired images, and (x, y) represents the image coordinates within the brightness map 1162.

According to an embodiment, the timing control module 1102 may control the timing of receiving image information from the depth camera 1120. The timing control module 1102 may generate a control signal to control the exposure time of the imaging element inside the depth camera 1120. According to an embodiment, the timing control module 1102 may control the timing at which the accumulation module 1103 performs calculations. The timing control module 1102 may vary the interval for outputting the control signal depending on the shooting situations. Accordingly, the timing control module 1102 may vary frames per second (FPS) of the image output from the image signal processor 1100 and adjust a duty ratio of a timing control signal under the same FPS situations.

According to an embodiment, the accumulation module 1103 may be an adder that accumulates an image signal output from the resolution changing module 1101. The calculation result of the accumulation module 1103 is Gi(x, y), which is the image information in a form where the previous information Gi-1(x, y) is added to Fi(x, y). For example, when initial image output information on the resolution changing module 1101 is F1(x, y), a "" may be input to the accumulation module 1103 along with F1(x, y). Therefore, initial output information on the accumulation module 1103 will be a "", and second output information on the accumulation module 1103 will be a "". As described above, the accumulation module 1103 may perform an operation of accumulating output information from the resolution changing module 1101.

According to an embodiment, the processing module 1104 may include a calculation unit for extracting the absolute amount of light of the image coordinates (x, y) through the output information Gi(x, y) of the accumulation module 1103. The processing module 1104 may measure the absolute amount of light of the light rays reaching the imaging element by using information such as a lens F-value, international standard organization (ISO), exposure, and shutter speed, which are parameters for adjusting the brightness of the image in the camera. Generally, when imaging a very bright light source, the shutter speed needs to be fast and the ISO needs to be set as low as possible to prevent the pixel output of the imaging element from saturating. The processing module 1104 may control the timing control module 1102 to adjust the shutter speed quickly and extract an area with high illuminance in the surrounding environment of the wearable electronic device 200.

According to an embodiment, the processing module 1104 may control the timing control module 1102 to adjust the number of extracted images. As the number of extracted images increases, the brightness of the image may be extracted more precisely. For example, in Gi(x, y) illustrated in FIG. 11, as the value of i increases, it becomes possible to generate a more precise brightness map 1162. According to an embodiment, the processing module 1104 may be set to limit the value of i, which represents the number of images for acquiring a brightness image, in an environment where the external illuminance is greater than a designated threshold.

According to an embodiment, the processing module 1104 may use position information on the wearable electronic device 200 extracted through the position tracking module 1105, and accordingly, the processing module 1104 may generate the brightness map 1162 corresponding to the entire surrounding environment of the wearable electronic device 200.

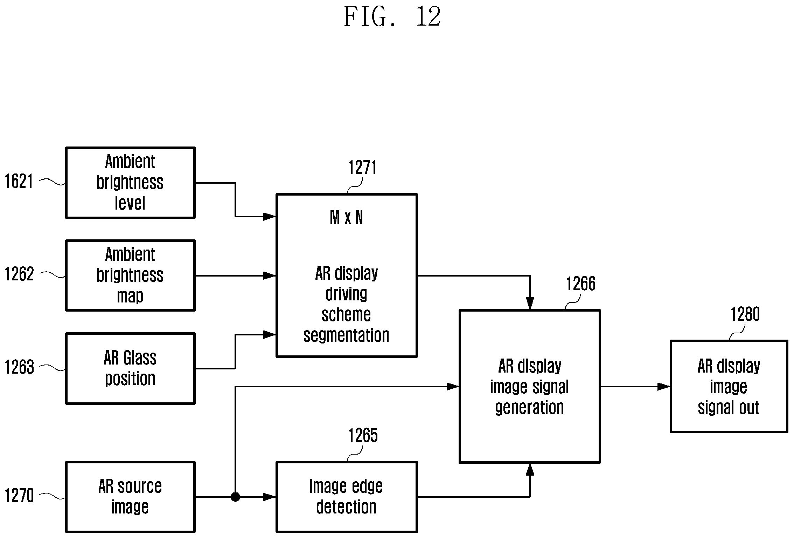

FIG. 12 is a flowchart illustrating an operation of generating an image on the basis of external illuminance in the wearable electronic device 200 according to an embodiment.

The operations illustrated in FIG. 12 may be performed by the processor 120 (e.g., processor 120 in FIG. 1). For example, the memory (e.g., memory 130 in FIG. 1) of the electronic device may store instructions that, when executed, allow the processor 120 to perform at least some of the operations illustrated in FIG. 12.

Operation 1261 may represent an operation of obtaining the illuminance level of the surrounding environment of the wearable electronic device 200 using the illuminance sensor 1010 according to an embodiment described in FIG. 10.

Operation 1262 may represent an operation of obtaining the brightness map 1162 according to an embodiment described in FIG. 11.

Operation 1263 may represent an operation of determining the position of the wearable electronic device 200 based on the movement of the wearable electronic device 200, the direction of the user 202's head, and the user 202's gaze direction, using the head tracking module 1063 and the gaze tracking module 1064 according to an embodiment described in FIG. 10.

Operation 1271 may represent an operation of dividing the screen of the image output from the display of the wearable electronic device 200 (e.g., display panel 410 in FIG. 4) into M x N illuminance unit areas on the basis of the information extracted in operations 1261, 1262, and 1263. The processor 120 may determine the luminance ratio between the outline portion (e.g., outline portion 623a in FIG. 6B) and the non-outline portion (e.g., non-outline portion 623b in FIG. 6B) for each of the divided unit areas. For example, at operation 1271, the processor 120 may determine a driving scheme of the outline portion 623a and the non-outline portion 623b for each illuminance unit area. The processor 120 may determine the brightness of each area in the field of view corresponding to the user 202's gaze direction on the basis of the brightness map 1162. The processor 120 may divide the field of area into a sunny area (e.g., sunny area 821 in FIG. 8) and a shaded area (e.g., shaded area 822 in FIG. 8) on the basis of the brightness for each area within the field of area. The processor 120 may control the display 410 to display the first converted image (e.g., image 611 in FIG. 6A) through the sunny area 821 and to display the second converted image (e.g., image 621 in FIG. 6B) through the shaded area. For example, the processor 120, in the wearable electronic device 200, may display a portion of the image corresponding to the sunny area 821 in the form of the first converted image, which displays only the outline portion (e.g., outline portion 613a in FIG. 6A), and display another portion of the image corresponding to the shaded area 822 in the form of the second converted image, in which the luminance ratio between the outline portion (e.g., outline portion 623a in FIG. 6B) and the non-outline portion (e.g., non-outline portion 623b in FIG. 6B) is adjusted. For example, the wearable electronic device 200 may display at least one first object 831 in the sunny area 821, but display only the outline of the first object 831, similar or identical to the example in FIG. 6A. The wearable electronic device 200 may display at least one second object 832 in the shaded area 822, but display the second object 832 in a form where the luminance ratio between the outline portion 623a and the non-outline portion 623b is adjusted, similar or identical to the example in FIG. 6B.

Block 1270 illustrated in FIG. 12 may represent an original image initially generated to be displayed through the see-through display of the wearable electronic device 200 (e.g., see-through display 204 in FIG. 2). According to an embodiment, an original image may be generated by the processor 120 or the image signal processor 1060.

Operation 1265 may represent an operation of detecting an edge area (e.g., outline area) of at least one object from the image to be displayed by the display panel 410, using the edge detection module 1065 according to an embodiment described in FIG. 10. Edge information corresponding to the edge area generated at operation 1265 may be input to operation block 1266.

At operation 1266, the processor 120 may receive the edge information and the original image, and generate a final output image to be displayed by the wearable electronic device 200 according to the driving scheme determined for each area at operation 1271 (e.g., a form that displays only the outline portion, or a form in which the luminance ratio between the outline portion 623a and the non-outline portion 623b is adjusted). The final output image generated at operation 1266 may be delivered to the display driving IC (DDI) that drives the display panel 410 (e.g., DDI 1080 in FIG. 10), and at operation 1280, the display driving IC (DDI) 1080 may drive the display panel 410 to display the final output image.

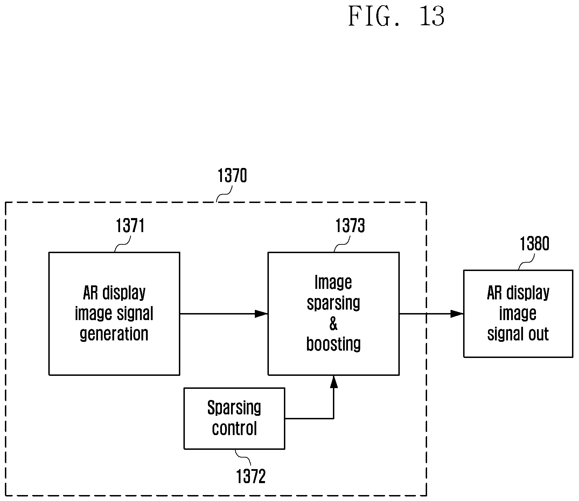

FIG. 13 is a flowchart illustrating an operation of adjusting the resolution of an image to increase the luminance of pixels in the wearable electronic device 200 according to an embodiment.

The operations illustrated in FIG. 13 may be performed by the processor 120 (e.g., processor 120 in FIG. 1). For example, the memory (e.g., memory 130 in FIG. 1) of the electronic device may store instructions that, when executed, allow the processor 120 to perform at least some of the operations illustrated in FIG. 13.

Block 1370 in FIG. 13 may represent at least a portion of an image processing block performed within the image signal processor 1060 according to an embodiment.

Operation 1371 may represent the processing result of operation 1266 according to an embodiment described in FIG. 12. For example, the image signal processor 1060 may generate the final output image to be displayed by the wearable electronic device 200 by determining the driving scheme for each area (e.g., a form that displays only the outline portion, or a form in which the luminance ratio between the outline portion and the non-outline portion is adjusted).

At operation 1372, the image signal processor 1060 may determine a reduction ratio for the resolution of the final output image generated at operation 1371. The image signal processor 1060 may determine the reduction ratio for the resolution on the basis of designated conditions and output a control signal related to the determined reduction ratio.

At operation 1373, the image signal processor 1060 may reduce the resolution of the final output image on the basis of the control signal related to the reduction ratio. The image signal processor 1060 may generate a low-resolution image by reducing the resolution of the final output image. The image signal processor 1060 may divide a plurality of pixels of the display (e.g., display panel 410 in FIG. 4) into an on-pixel group and an off-pixel group in relation to the low-resolution image. The image signal processor 1060 may apply designated power and offset power to the on-pixel group to enhance the luminance of the on-pixel group while displaying the low-resolution image through the display 410. Here, the offset power may be the power used to turn on the off-pixel group. Consequently, the output image generated by the image signal processor 1060 and delivered to the display driving IC (DDI) (e.g., DDI 1080 in FIG. 10) may have reduced resolution, but an image that remains unchanged is generated in terms of the overall luminance, resulting in an augmented reality image with enhanced visibility due to the augmented luminance of the on-pixel group.

At operation 1380, the image signal processor 1060 may deliver the final output image with reduced resolution, as determined at operation 1373, to the display driving IC (DDI) (e.g., DDI 1080 in FIG. 10). The DDI 1080 may receive the final output image with reduced resolution from the image signal processor 1060 and drive the display panel (e.g., display panel 410 in FIG. 4) to output light corresponding to the input image. The light corresponding to the image output from the display panel 410 may be provided to the user through the see-through display (e.g., see-through display 204 in FIG. 2)., which is at least a part of the glass (e.g., glass 330 in FIG. 3)

A wearable electronic device (e.g., wearable electronic device 200 in FIG. 2) according to an embodiment may include at least one lens (e.g., glass 330 in FIG. 3), a battery (e.g., battery 189 in FIG. 1), a display (e.g., display module 310 in FIG. 3), a waveguide (e.g., waveguide 430 in FIG. 4) that receives an image from the display 310 and outputs the image through the at least one lens 330, an illuminance sensor (e.g., illuminance sensor 1010 in FIG. 10) that detects the external illuminance of the wearable electronic device 200, and a processor (e.g., processor 120 in FIG. 1), in which the processor 120 may activate a visibility enhancement mode in response to a predetermined event, detect the ambient illuminance of the wearable electronic device 200 using the illuminance sensor 1010 in response to the activation of the visibility enhancement mode, and dynamically adjust the luminance of the image output through the display 310 and a displaying form of at least one object included in the image on the basis of the detected illuminance.

According to an embodiment, the processor 120 may set the overall luminance of the image to a first luminance level when the detected illuminance is within a designated first range, identify an outline of at least one object included in the image, generate a first converted image including only the identified outline, and control the display 310 to display the first converted image on the basis of the first luminance level.

According to an embodiment, the processor 120 may, when the detected illuminance is within a designated second range, which is less than the first range, set overall luminance of the image to a second luminance level, which is less than the first luminance level, identify the outline of at least one object included in the image, divide, on the basis of the identified outline, the image into an outline area corresponding to the outline and a non-outline area excluding the outline area, generate a second converted image by setting luminance of the outline area higher than luminance of the non-outline area, and control the display 310 to display the second converted image on the basis of the second luminance level.

According to an embodiment, the processor 120 may set a color of the outline included in the first converted image to white or green.

According to an embodiment, the processor 120 may, when the detected illuminance is within a designated third range, which is less than the second range, set overall luminance of the image to a third luminance level, which is less than the second luminance level, and control the display 310 to display the image on the basis of the third luminance level.

According to an embodiment, the processor 120 may set saturation of the second converted image to be lower than saturation of the image.

According to an embodiment, the processor 120 may increase a width of the outline included in the first converted image in proportion to the detected magnitude of illuminance.

According to an embodiment, the wearable electronic device may further include at least one front camera configured to capture a front of the wearable electronic device 200, and at least one eyeball-tracking camera configured to track a user's eyeball, in which the processor 120 may generate a brightness map corresponding to a front environment of the wearable electronic device 200 using the illuminance sensor 1010, the brightness map including brightness information mapped for each area of the front environment of the wearable electronic device 200, determine the user's gaze direction within the front environment of the wearable electronic device 200 by tracking the user's eyeball, determine the brightness for each area of a field of area corresponding to the user's gaze direction on the basis of the brightness map, divide the field of area into a sunny area and a shaded area on the basis of brightness for each area of the field of area, and display the first converted image through the sunny area, and display the second converted image through the shaded area.

According to an embodiment, the processor 120 may, when the visibility enhancement mode is activated, generate a low-resolution image by reducing resolution of the image, divides a plurality of pixels of the display 310 into an on-pixel group and an off-pixel group in relation to the low-resolution image, and apply designated power and offset power to the on-pixel group so that luminance of the on-pixel group is enhanced while displaying the low-resolution image through the display 310, in which the offset power may be power used to turn on the off-pixel group.

According to an embodiment, the processor 120 may identify a battery level as the remaining battery capacity, and the predetermined event that activates the visibility enhancement mode may include a state in which the battery level is less than a designated threshold.

According to an embodiment, the predetermined event that activates the visibility enhancement mode may include user input through an external device.

In a method of the wearable electronic device 200 according to an embodiment, the wearable electronic device 200 may include at least one lens 330, a battery, a display 310, a waveguide 430 that receives an image from the display 310 and outputs the image through the at least one lens 330, and an illuminance sensor 1010 that detects the external illuminance of the wearable electronic device 200, in which the method may include activating a visibility enhancement mode in response to a predetermined event, detecting the ambient illuminance of the wearable electronic device 200 using the illuminance sensor 1010 in response to the activation of the visibility enhancement mode, and dynamically adjusting the luminance of the image output through the display 310 and a displaying form of at least one object included in the image on the basis of the detected illuminance.

According to an embodiment, the method may include setting, when the detected illuminance is within a designated first range, overall luminance of the image to a first luminance level, identifying an outline of at least one object included in the image; generating a first converted image including only the identified outline, and controlling the display 310 to display the first converted image on the basis of the first luminance level.

According to an embodiment, the method may include setting, when the detected illuminance is within a designated second range, which is less than the first range, overall luminance of the image to a second luminance level, which is less than the first luminance level, identifying the outline of at least one object included in the image, dividing, on the basis of the identified outline, the image into an outline area corresponding to the outline and a non-outline area excluding the outline area, generating a second converted image by setting luminance of the outline area higher than luminance of the non-outline area, and controlling the display 310 to display the second converted image on the basis of the second luminance level.

According to an embodiment, the method may include setting a color of the outline included in the first converted image to white or green.

According to an embodiment, the method may include setting overall luminance of the image to a third luminance level, which is less than the second luminance level, when the detected illuminance is within a designated third range that is less than the second range, and controlling the display 310 to display the image on the basis of the third luminance level.

According to an embodiment, the method may include setting saturation of the second converted image to be lower than saturation of the image.

According to an embodiment, the method may include increasing a width of the outline included in the first converted image in proportion to magnitude of the detected illuminance.

According to an embodiment, the wearable electronic device 200 may further include at least one front camera configured to capture a front of the wearable electronic device, and at least one eyeball-tracking camera configured to track a user's eyeball, in which the method may include generating a brightness map corresponding to a front environment of the wearable electronic device 200 using the illuminance sensor 1010, the brightness map including brightness information mapped for each area of the front environment of the wearable electronic device 200, determining the user's gaze direction within the front environment of the wearable electronic device 200 by tracking the user's eyeball, determining the brightness for each area of a field of area corresponding to the user's gaze direction on the basis of the brightness map, dividing the field of area into a sunny area and a shaded area on the basis of the brightness for each area of the field of area, displaying the first converted image through the sunny area, and displaying the second converted image through the shaded area.

According to an embodiment, when the visibility enhancement mode is activated, the method may include generating a low-resolution image by reducing the resolution of the image, dividing a plurality of pixels of the display 310 into an on-pixel group and an off-pixel group in relation to the low-resolution image, and applying designated power and offset power to the on-pixel group so that the luminance of the on-pixel group is enhanced while displaying the low-resolution image through the display 310, in which the offset power may be the power used to turn on the off-pixel group.

While the present disclosure has been illustrated and described with reference to various embodiments thereof, it will be understood by those skilled in the art that various modifications in the forms and details may be made without departing from the spirit and scope of the disclosure as described below. The scope of the present disclosure is defined by the appended claims and the equivalents thereof.

## Claims

1. A wearable electronic device, comprising:
at least one lens;
a battery;
a display;
a waveguide configured to receive an image from the display and output the received image through the at least one lens;
an illuminance sensor configured to detect external illuminance of the wearable electronic device; and
a processor,
wherein the processor, in response to a predetermined event, activates a visibility enhancement mode, detects, in response to the activation of the visibility enhancement mode, ambient illuminance of the wearable electronic device using the illuminance sensor, and dynamically adjusts, on the basis of the detected illuminance, luminance of the image output through the display and a displaying form of at least one object included in the image.

2. The wearable electronic device of claim 1, wherein the processor, when the detected illuminance is within a designated first range, sets overall luminance of the image to a first luminance level, identifies an outline of at least one object included in the image, generates a first converted image including only the identified outline, and controls the display to display the first converted image on the basis of the first luminance level.

3. The wearable electronic device of any one of claims 1 to 2, wherein when the detected illuminance is within a designated second range, which is less than the first range, the processor:
sets overall luminance of the image to a second luminance level, which is less than the first luminance level, identifies the outline of at least one object included in the image;
divides, on the basis of the identified outline, the image into an outline area corresponding to the outline and a non-outline area excluding the outline area;
generates a second converted image by setting luminance of the outline area higher than luminance of the non-outline area; and
controls the display to display the second converted image on the basis of the second luminance level.

4. The wearable electronic device of any one of claims 1 to 3, wherein the processor sets a color of the outline included in the first converted image to white or green.

5. The wearable electronic device of any one of claims 1 to 3, wherein the processor, when the detected illuminance is within a designated third range, which is less than the second range, sets overall luminance of the image to a third luminance level, which is less than the second luminance level, and controls the display to display the image on the basis of the third luminance level.

6. The wearable electronic device of any one of claims 1 to 3, wherein the processor sets saturation of the second converted image to be lower than saturation of the image.

7. The wearable electronic device of any one of claims 1 to 2, wherein the processor increases a width of the outline included in the first converted image in proportion to magnitude of the detected illuminance.

8. The wearable electronic device of any one of claims 1 to 3, further comprising:
at least one front camera configured to capture a front of the wearable electronic device; and
at least one eyeball-tracking camera configured to track a user's eyeball,
wherein the processor:
generates a brightness map corresponding to a front environment of the wearable electronic device using the illuminance sensor, the brightness map including brightness information mapped for each area of the front environment of the wearable electronic device;
determines the user's gaze direction within the front environment of the wearable electronic device by tracking the user's eyeball;
determines the brightness for each area of a field of area corresponding to the user's gaze direction on the basis of the brightness map;
divides the field of area into a sunny area and a shaded area on the basis of brightness for each area of the field of area; and
displays the first converted image through the sunny area, and displays the second converted image through the shaded area.

9. The wearable electronic device of any one of claims 1 to 8, wherein when the visibility enhancement mode is activated, the processor:
generates a low-resolution image by reducing resolution of the image;
divides a plurality of pixels of the display into an on-pixel group and an off-pixel group in relation to the low-resolution image; and
applies designated power and offset power to the on-pixel group so that luminance of the on-pixel group is enhanced while displaying the low-resolution image through the display, wherein the offset power is power used to turn on the off-pixel group.

10. The wearable electronic device of any one of claims 1 to 9, wherein the processor identifies a battery level as remaining capacity of the battery, and
wherein the predetermined event that activates the visibility enhancement mode includes a state in which the battery level is less than a designated threshold.

11. The wearable electronic device of any one of claims 1 to 10, wherein the predetermined event that activates the visibility enhancement mode includes a user input through an external device.

12. A method of a wearable electronic device, the wearable electronic device including at least one lens, a battery, a display, a waveguide, and an illuminance sensor,
the method comprising:
activating a visibility enhancement mode in response to a predetermined event;
detecting ambient illuminance of the wearable electronic device using the illuminance sensor in response to the activation of the visibility enhancement mode; and
adjusting dynamically luminance of an image output through the display and a displaying form of at least one object included in the image on the basis of the detected illuminance.

13. The method of claim 12, comprising:
setting, when the detected illuminance is within a designated first range, overall luminance of the image to a first luminance level;
identifying an outline of at least one object included in the image;
generating a first converted image including only the identified outline; and
controlling the display to display the first converted image on the basis of the first luminance level.

14. The method of any one of claims 12 to 13, comprising:
setting, when the detected illuminance is within a designated second range, which is less than the first range, overall luminance of the image to a second luminance level, which is less than the first luminance level;
identifying the outline of at least one object included in the image;
dividing, on the basis of the identified outline, the image into an outline area corresponding to the outline and a non-outline area excluding the outline area;
generating a second converted image by setting luminance of the outline area higher than luminance of the non-outline area; and
controlling the display to display the second converted image on the basis of the second luminance level.

15. The method of any one of claims 12 to 14, comprising:
setting a color of the outline included in the first converted image to white or green.
